# NEUE EUROPÄISCHE PATENTSCHRIFT

(11) **EP 2 173 571 B2**
(45) Veröffentlichungstag und Bekanntmachung des Hinweises auf die Entscheidung über den Einspruch: **26.12.2018**
(45) Hinweis auf die Patenterteilung: 14.01.2015
(21) Anmeldenummer: 08784686.1
(22) Anmeldetag: 10.07.2008
(51) Int. Cl.: B42D 25/30, B42D 25/328, B42D 25/373

(54) **SICHERHEITSELEMENT**
SECURITY ELEMENT
ÉLÉMENT DE SÉCURITÉ

(30) Priorität: 23.07.2007 DE 102007034716
(43) Veröffentlichungstag der Anmeldung: 14.04.2010
(73) Patentinhaber: Giesecke+Devrient Currency Technology GmbH, 81677 München (DE)
(72) Erfinder: KELLER, Mario, 80799 München (DE)
(74) Vertreter: Zeuner, Stefan
(86) Internationale Anmeldenummer: PCT/EP2008/005624
(87) Internationale Veröffentlichungsnummer: WO 2009/012893

(56) Entgegenhaltungen:
- EP-A1- 1 748 306
- EP-A2- 0 201 323
- EP-A2- 0 328 086
- WO-A1-01/03945
- WO-A1-01/53113
- WO-A1-02/00445
- WO-A1-95/10420
- WO-A1-03/061980
- WO-A1-03/095227
- WO-A1-03/095228
- WO-A1-2004/095090
- WO-A1-2005/105475
- WO-A2-03/054297
- WO-A2-03/091042
- WO-A2-2005/026848
- WO-A2-2006/002756
- WO-A2-2007/138293
- DE-A1- 10 319 232
- DE-A1-102004 039 355

## Beschreibung

Die Erfindung betrifft ein mehrschichtiges Sicherheitselement, ein Sicherheitspapier und ein Wertdokument mit einem solchen Sicherheitselement. Die Erfindung betrifft auch ein Verfahren zur Herstellung derartiger Sicherheitselemente und zur Herstellung von Sicherheitspapier.

Aus der Druckschrift WO 95/10420 ist ein Wertdokument bekannt, in das nach seiner Herstellung eine durchgehende Öffnung gestanzt wird, die anschließend mit einer die Öffnung allseits überragenden Abdeckfolie einseitig verschlossen wird. Da die Abdeckfolie zumindest in Teilbereichen transparent ist, scheint der Untergrund beim Kopieren des Wertdokuments durch und macht die Kopie somit als solche erkennbar. Die Abdeckfolie kann auch ein Sicherheitsmerkmal, wie etwa ein Hologramm, aufweisen.

Die DE 10 2004 039 355 A1 beschreibt in Abbildung 6b, die Verweise in Klammern beziehen sich auf diese Druckschrift, ein mehrschichtiges Sicherheitselement (160), umfassend einen ersten transparenten Schichtaufbau (170) mit ersten transluzenten Teilbereichen (176), welche eine transluzente Metallisierung aufweisen, und einen zweiten opaken, Farbkippeffekt aufweisenden Schichtaufbau (175,172,174) mit zweiten, transparenten Teilbereichen (164), wobei der zweite Schichtaufbau eine Schicht aus Flüssigkristallmaterial und eine dunkle Schicht umfasst und die zweiten Teilbereiche Aussparungen in der dunklen Schicht sind (siehe Absatz 0077), wobei der erste Schichtaufbau und der zweite Schichtaufbau so übereinander angeordnet sind, dass die ersten transluzenten Teilbereiche (176) des ersten Schichtaufbaus und die zweiten transparenten Teilbereiche (164) des zweiten Schichtaufbaus teilweise überlappen. Des Weiteren wird ein Verfahren zur Herstellung eines Sicherheitselements beschrieben, bei dem ein erster Schichtaufbau (170) mit ersten transluzenten Teilbereichen (176) und ein zweiter opaker, Farbkippeffekt aufweisender Schichtaufbau (175,172,174) mit zweiten transparenten Teilbereichen (164) bereitgestellt werden, und der erste Schichtaufbau und der zweite Schichtaufbau so übereinander angeordnet werden, dass die ersten transluzenten Teilbereiche (176) des ersten Schichtaufbaus und die zweiten transparenten Teilbereiche (164) des zweiten Schichtaufbaus teilweise überlappen.

Ein allgemeines Problem bei der Herstellung von Sicherheitselementen besteht darin, dass Standard-Hologramme mit einer Aluminium-Reflexionsschicht zunehmend freier verfügbar werden. Der Sicherheitsstandard derartiger Standard-Hologramme und der damit ausgestatteten Wertdokumente verringert sich daher zunehmend.

Ausgehend davon liegt der Erfindung die Aufgabe zugrunde, ein Sicherheitselement anzugeben, das gegenüber dem Stand der Technik eine erhöhte Fälschungssicherheit aufweist.

Diese Aufgabe wird durch das mehrschichtige Sicherheitselement mit den Merkmalen des Hauptanspruchs gelöst. Ein Sicherheitspapier für die Herstellung von Sicherheitsdokumenten und ein Wertdokument mit einem solchen Sicherheitselement sowie Herstellungsverfahren für ein solches Sicherheitselement und ein solches Wertdokument sind Gegenstand der nebenge-ordneten Ansprüche. Weiterbildungen der Erfindung sind Gegenstand der Unteransprüche.

Das erfindungsgemäße Sicherheitselement umfasst einen ersten transparenten Schichtaufbau mit ersten transluzenten Teilbereichen und einen zweiten opaken, Farbkippeffekt aufweisenden Schichtaufbau mit zweiten transparenten Teilbereichen. Der erste und zweite Schichtaufbau sind so übereinander angeordnet, dass die ersten transluzenten Teilbereiche des ersten Schichtaufbaus und die zweiten transparenten Teilbereiche des zweiten Schichtaufbaus teilweise überlappen.

Unter "transluzent" bzw. "Transluzenz" ist im Sinne der Erfindung eine Lichtdurchlässigkeit von unter 90 %, vorzugsweise zwischen 80 % und 20 % zu verstehen.

Unter "transparent" bzw. "Transparenz" ist im Sinne der Erfindung eine Lichtdurchlässigkeit von 90 % und mehr, vorzugsweise von 95 % und mehr zu verstehen.

Unter "opak" bzw. "Opazität" ist im Sinne der Erfindung eine Lichtdurchlässigkeit von unter 10 %, vorzugsweise von 0 % zu verstehen.

Unter "Licht" wird Licht aus dem sichtbaren Bereich des Wellenlängenspektrums (VIS) verstanden.

Im ersten Schichtaufbau sind die ersten Teilbereichen mit einer transluzenten Metallisierung versehen. Bei der transluzenten Metallisierung kann es sich um eine gerasterte Metallschicht oder um eine vollflächige, dünne Metallschicht handeln. Ist die Metallschicht vollflächig ausgeführt, liegt deren Dicke vorzugsweise zwischen 4 und 20 nm.

Die ersten Teilbereiche weisen zusätzlich Beugungsstrukturen auf. Hierzu kann in ein Substrat oder ein mit einer Prägelackschicht beschichtetes Substrat eine geeignete Struktur eingeprägt werden. Als Beugungsstrukturen kommen Refraktionsmuster, Transmissions-, Volumen- oder Reflexionshologramme, aber auch Gitterstrukturen in Betracht.

Besonders bevorzugt sind Ausführungsformen, bei denen die transluzente Metallisierung und die Beugungsstrukturen deckungsgleich vorliegen. Dies ist beispielsweise dann der Fall, wenn eine Beugungsstruktur mit der transluzenten Metallschicht bedampft wird.

Der zweite opake Schichtaufbau weist einen Farbkippeffekt auf und zweite transparente Teilbereiche.

Unter "Farbkippeffekt" ist dabei eine betrachtungswinkelabhängige Farbänderung zu verstehen.

Der Farbkippeffekt wird mittels mehrschichtigem Dünnschichtaufbau oder mittels Flüssigkristallmaterialien erzeugt.

Der Farbkippeffekt eines mehrschichtigen Dünnschichtaufbaus beruht auf Interferenzeffekten aufgrund von Mehrfachreflexionen in den verschiedenen Teilschichten des Dünnschichtelements und ist beispielsweise in der Druckschrift EP 0 395 410 B1 im Detail erläutert. Der Farbeindruck des Dünnschichtelements ändert sich mit dem Betrachtungswinkel beispielsweise von Grün nach Blau, von Blau nach Magenta oder von Magenta nach Grün.

Der Dünnschichtaufbau des zweiten Schichtaufbaus enthält eine opake Reflektorschicht und weitere Schichten. Bei den weiteren Schichten handelt es sich insbesondere um eine Dielektrikumsschicht und eine Absorberschicht. Vorzugsweise liegt die Dielektrikumsschicht zwischen der Reflektorschicht und der Absorberschicht.

Die Absorberschicht ist typischerweise durch dünne Metallschichten mit einer Dicke von 4 nm bis 20 nm gebildet. Als Metalle kommen insbesondere Chrom, Eisen, Gold, Aluminium oder Titan, aber auch seltenere Metalle, wie Vanadium, Palladium oder Molybdän, infrage. Darüber hinaus können beispielsweise auch Nickel, Kobalt, Wolfram, Niob oder Verbindungen und Legierungen der genannten Metalle, wie etwa Nickel-Chrom-Eisen, verwendet werden. Weitere geeignete Materialien für die Absorberschichten sind in der Druckschrift WO 01/03945 angegeben.

Für die Dielektrikumsschicht kommen insbesondere aufdampfbare und durchsichtige Materialien infrage. Geeignete Materialien mit Brechungsindex kleiner 1,7 sind beispielsweise Siliziumdioxid, Aluminiumoxid, Magnesiumfluorid oder SiOₓ, mit 1 < x < 2. Auch Materialien mit höherem Brechungsindex, wie etwa Zirkonoxid, Zinksulfid, Titandioxid oder Indium-Zinn-Oxid, können verwendet werden. Auch für die Dielektrikumsschichten können weitere geeignete Materialien der Druckschrift WO 01/03945 entnommen werden.

Die Dielektrikumsschichten weisen typischerweise eine Schichtdicke von etwa 100 nm bis etwa 1000 nm, bevorzugt von etwa 200 nm bis etwa 500 nm auf.

Bevorzugt ist die Reflektorschicht durch eine Metallschicht gebildet. In einer bevorzugten Ausgestaltung des Sicherheitselements ist die Reflektorschicht aus einem Metall der Gruppe Aluminium, Silber, Nickel, Kupfer, Gold, Eisen oder Chrom gebildet. Die verschiedenen Farben der verwendeten Metalle erlauben dann reizvolle optische Kontraste beim Betrachten des Sicherheitselements. Besonders bevorzugt besteht die Reflektorschicht aus Aluminium. Die Metallschichtdicke wird so gewählt, dass die Schicht opak ist.

Die Absorberschicht, die Dielektrikumsschicht und die Reflektorschicht werden bevorzugt in einem Vakuumbedampfungsverfahren auf ein Substrat aufgebracht. Das Substrat kann später einen Bestandteil des fertigen Sicherheitselements bilden. Die Schichten können auch auf einem Substrat, das lediglich als Zwischenträger dient, erzeugt werden. Der Zwischenträger wird bei Fertigstellung des Sicherheitselements oder spätestens beim Aufbringen des Sicherheitselements auf einen Gegenstand entfernt. Dient das Substrat als Zwischenträger, werden die aufzubringenden Schichten in umgekehrter Reihenfolge, in der sie im Endprodukt erscheinen sollen, auf das Substrat aufgebracht. In diesem Fall wird das Sicherheitselement mit Substrat als Transferelement bezeichnet. Als Bedampfungsverfahren kommen beispielsweise PVD-Verfahren, wie Schiffchenbedampfung, Bedampfung durch Widerstands- oder Induktionsheizung, AC- und DC-Sputterverfahren, Elektronenstrahl- oder Lichtbogenbedampfung, aber auch CVD-Verfahren, wie Sputtern in einem reaktiven Plasma, oder andere plasmaunterstützte Bedampfungsverfahren, in Betracht.

Das Substrat bzw. der Zwischenträger ist bevorzugt eine transparente Folie, besonders bevorzugt eine PET-Folie.

Alternativ kann der Farbkippeffekt mittels geeigneter Flüssigkristallmaterialien erzeugt werden. Entsprechende Sicherheitselemente sind in der EP 0 435 029 B2 beschrieben. Erfindungsgemäß weist hierzu der opake zweite Schichtaufbau eine - vorzugsweise vollflächige - Schicht aus Flüssigkristallmaterial und eine dunkle - vorzugsweise schwarze - Schicht auf.

Erfindungsgemäß weist der zweite Schichtaufbau transparente zweite Teilbereiche auf. As handelt dabei um Aussparungen. Bei Verwendung von Dünnschichtaufbauten handelt es sich um Aussparungen in der Reflektor-, vorzugsweise in der Reflektor- und Absorberschicht. Bei Verwendung von Flüssigkristallmaterial handelt es sich um Aussparungen in der dunklen Schicht.

Die Aussparungen können in beliebiger Form vorliegen, vorzugsweise in Form von Mustern, Zeichen oder Codierungen. Die Aussparungen können beispielsweise in Form alphanumerischer Zeichen oder Ziffern in Positiv- oder Negativschrift, aber auch in Form beliebiger Bilddarstellungen ausgebildet sein. Eine derartige Kennung erhöht die Fälschungssicherheit des Sicherheitselements weiter, das sich dem Betrachter ansprechend und mit auch für den Laien leicht erfassbaren optischen Wirkungen präsentiert.

Die Aussparungen können nachträglich durch Ätzung, mittels Laserabtrag oder mittels Waschverfahren, wie in der EP 1 023 499 B1 beschrieben, erzeugt werden. Alternativ können beim Aufdampfen der Schichten, in die Aussparungen eingebracht werden, Masken eingesetzt werden. Die dunkle Schicht wird vorzugsweise aufgedruckt, wobei die Aussparungen bereits beim Druckvorgang berücksichtigt werden können.

Der erste und zweite Schichtaufbau können auf einem Substrat mit einer ersten und zweiten, einander gegenüberliegenden Substratoberflächen vorliegen. Dabei können der erste und zweite Schichtaufbau auf derselben Substratoberfläche des Substrates oder alternativ auf den gegenüberliegenden Substratoberflächen vorliegen.

Die Schichtaufbauten sind zudem so angeordnet, dass der Farbkippeffekt des zweiten Schichtaufbaus bei Betrachtung des Sicherheitselementes von der Seite des ersten Schichtaufbaus her erkennbar ist.

Das Sicherheitselement ist gegenüber bekannten Sicherheitselementen somit erheblich schwerer nachstellbar. Darüber hinaus stellt die vorgeschlagene Gestaltung ein optisch ansprechendes Erkennungsmerkmal dar, das auch von einem Laien leicht erkannt und als echt bewertet werden kann.

Bei dem Substrat handelt es sich vorzugsweise um eine transparente Folie. Insbesondere eignet sich Polyethylentherephthalat (PET).

Das erfindungsgemäße Sicherheitselement kann insbesondere überall dort sinnvoll eingesetzt werden, wo es von gegenüberliegenden Seiten her betrachtet werden kann. So kann es in oder über einer Öffnung eines Sicherheitspapiers oder eines Wertdokuments, oder in oder über einem transparenten Bereich solcher Dokumente angeordnet sein. Öffnungen und transparente Bereiche gemeinsam werden nachfolgend als Fensterbereiche eines Dokuments bezeichnet.

Ebenso ist es möglich, dass das Sicherheitselement als Sicherheitsstreifen oder als Sicherheitsfaden, etwa als Fenstersicherheitsfaden eingesetzt wird. Der Schichtaufbau solcher Sicherheitsfäden wird zweckmäßig mit einer Kaschierfolie geschützt.

In einer anderen zweckmäßigen Ausgestaltung bildet das Sicherheitselement ein Transferelement zum Aufbringen auf ein Sicherheitspapier, Wertdokument und dergleichen. Die zu transferierenden Schichten eines solchen Transferelements sind zweckmäßig über einer Trennschicht und in umgekehrter Reihenfolge, in der sie im Endprodukt erscheinen sollen, auf das Substrat aufgebracht. Das Substrat dient als Zwischenträger und nach dem Transfer des Elements auf den zu schützenden Gegenstand wird dieses entfernt. Als Transferelemente können bandförmige Endloselemente oder Einzelelemente, sogenannte "Patches", verwendet werden.

Die Erfindung umfasst auch ein Sicherheitspapier für die Herstellung von Wertdokumenten, wie Banknoten, Ausweiskarten oder dergleichen, mit einem oben beschriebenen Sicherheitselement. Das Sicherheitspapier kann wenigstens einen durchgehenden Fensterbereich enthalten, der mit dem Sicherheitselement bedeckt ist, so dass im Fensterbereich das Sicherheitselement bei Betrachtung von gegenüberliegenden Seiten her erkennbar ist.

Die Erfindung enthält weiter ein Wertdokument, wie eine Banknote, eine Ausweiskarte oder dergleichen, das mit einem oben beschriebenen Sicherheitselement versehen ist. Das Wertdokument kann wenigstens einen durchgehenden Fensterbereich enthalten, der mit dem Sicherheitselement bedeckt ist, so dass im Fensterbereich das Sicherheitselement bei Betrachtung von gegenüberliegenden Seiten her erkennbar ist.

Das erfindungsgemäße Sicherheitselement oder ein damit versehenes Sicherheitspapier oder Wertdokument können beispielsweise zur Sicherung von Waren beliebiger Art eingesetzt werden.

Ein Verfahren zur Herstellung eines erfindungsgemäßen Sicherheitselements für Sicherheitspapiere, Wertdokumente und dergleichen umfasst die Verfahrensschritte:
- ein erster transparenter Schichtaufbau mit ersten transluzenten Teilbereichen und
- ein zweiter opaker, Farbkippeffekt aufweisender Schichtaufbau mit zweiten transparenten Teilbereichen werden bereitgestellt,
- der erste Schichtaufbau und der zweite Schichtaufbau werden so übereinander angeordnet, dass die ersten transluzenten Teilbereiche des ersten Schichtaufbaus und die zweiten transparenten Teilbereiche des zweiten Schichtaufbaus teilweise überlappen.

In einer erfindungsgemäßen Ausführungsform werden der erste und zweite Schichtaufbau auf gegenüberliegende Substratoberflächen aufgebracht. Dabei wird ein Substrat mit einer ersten und einer zweiten, einander gegenüberliegenden Substratoberflächen bereitgestellt. In das Substrat werden auf der ersten Oberfläche in den ersten Teilbereichen Beugungsstrukturen geprägt oder das Substrat wird auf der ersten Oberfläche mit einer transparenten Prägelackschicht versehen, in die in den ersten Teilbereichen Beugungsstrukturen geprägt werden. Die geprägten Teilbereiche werden mit einer transluzenten Metallschicht versehen. Auf die zweite Oberfläche wird der zweite Schichtaufbau aufgebracht.

Auf die zweite Oberfläche des Substrates wird als zweiter Schichtaufbau eine Schicht aus Flüssigmaterial - vorzugsweise vollflächig - aufgebracht und diese anschließend bis auf die zweiten Teilbereiche mit einer dunklen, vorzugsweise schwarzen Schicht versehen wird. Vorzugsweise wird die dunkle Schicht nur bereichsweise aufgedruckt, so dass die zweiten Teilbereiche nicht bedruckt werden.

Alternativ können als zweiter Schichtaufbau auf die zweite Oberfläche des Substrates folgende Schichten in der Reihenfolge Absorber-, Dielektrikum-, Reflektorschicht aufgedampft werden.

In einem weiteren erfindungsgemäßen Verfahren werden der erste und zweite Schichtaufbau auf dieselbe Substratoberfläche aufgebracht. Hierzu wird ein Substrat mit einer ersten und einer zweiten, einander gegenüberliegenden Substratoberfläche bereitgestellt, auf der ersten Oberfläche der zweite Schichtaufbau aufgebracht, auf den zweiten Schichtaufbau eine transparente Prägelackschicht aufgebracht, in die in den ersten Teilbereichen Beugungsstrukturen geprägt werden, und die geprägten Teilbereiche mit einer transluzenten Metallschicht versehen.

Auf die erste Oberfläche des Substrates kann bis auf die zweiten Teilbereiche eine dunkle Schicht und darüber eine Schicht aus Flüssigmaterial - vorzugsweise vollflächig - aufgebracht werden. Alternativ können auf die erste Oberfläche des Substrates folgende Schichten in der Reihenfolge Reflektor-, Dielektrikum-, Absorberschicht aufgedampft werden.

In einer weiteren erfindungsgemäßen Alternative wird ein Substrat mit einer ersten und einer zweiten, einander gegenüberliegenden Substratoberfläche bereitgestellt. In die erste Substratoberfläche werden in den ersten Teilbereichen entweder direkt Beugungsstrukturen geprägt oder das Substrat wird auf der ersten Oberfläche mit einer transparenten Prägelackschicht versehen, in die in den ersten Teilbereichen Beugungsstrukturen geprägt werden. Die geprägten Teilbereiche werden bevorzugt mit einer transluzenten Metallschicht versehen und darauf der zweite Schichtaufbau aufgebracht.

Als zweiter Schichtaufbau wird zuerst eine Schicht aus Flüssigkristallmaterial und auf diese bis auf die zweiten Teilbereiche eine dunkle - vorzugsweise schwarze - Schicht aufgebracht. Alternativ können als zweiter Schichtaufbau auf die erste Oberfläche des Substrates folgende Schichten in der Reihenfolge Absorber-, Dielektrikum-, Reflektorschicht aufgedampft werden.

In den Verfahrensschritten der erfindungsgemäßen Ausführungsformen, in denen die Reflektorschicht aufgebracht wird, kann zur Erzeugung der transparenten zweiten Teilbereiche die Reflektorschicht in diesen zweiten Teilbereichen nicht aufgebracht oder nachträglich entfernt werden. Insbesondere kann die Reflektorschicht mittels Ätzen, Laser oder Waschverfahren entfernt werden.

In einer weiteren Variante können ein erstes und ein zweites Substrat mit jeweils einer ersten und einer zweiten, einander gegenüberliegenden Substratoberfläche bereitgestellt werden. Auf die erste Seite des ersten Substrates wird der erste Schichtaufbau und auf die erste Seite des zweiten Substrats wird der zweite Schichtaufbau aufgebracht und das erste und zweite Substrat werden mit jeweils der zweiten Oberfläche zusammenkaschiert.

Das Sicherheitselement kann in weiteren Bearbeitungsschritten zur Erzeugung eines Sicherheitsfadens oder eines Transferelements entsprechend geschnitten oder gestanzt und ausgerüstet werden.

Zur Herstellung eines Sicherheitspapieres wird das erfindungsgemäße Sicherheitselement in ein Papier mit einem Fensterbereich ein- oder auf das Papier aufgebracht, wobei der Fensterbereich vom Sicherheitselement überspannt wird.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: einen Querschnitt durch ein Sicherheitselement nach einem Ausführungsbeispiel der Erfindung,
- Fig. 3a, 3b und 4a, 4b: jeweils einen Querschnitt durch ein Sicherheitselement nach einem Ausführungsbeispiel der Erfindung, und
- Fig. 5: eine Aufsicht auf ein Sicherheitselement.

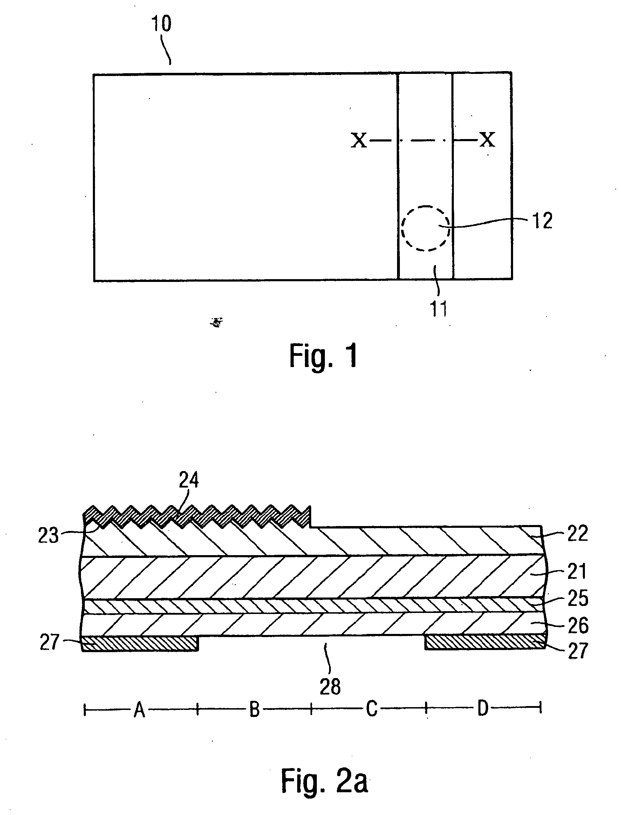

Die Erfindung wird nachfolgend am Beispiel einer Banknote erläutert. Fig. 1 zeigt dazu eine schematische Darstellung einer Banknote 10, die ein erfindungsgemäßes Sicherheitselement 11 in Form eines ca. 10 mm breiten Bandes aufweist, das einen in der Banknote vorliegenden, kreisförmigen Fensterbereich 12 abdeckt. Bei dem Fensterbereich 12 handelt es sich um eine Loch im Papier, das beispielsweise während der Papierherstellung gemäß der EP 1 468 141 A2 eingearbeitet wurde oder nach der Papierherstellung ausgestanzt wurde. Das Sicherheitselement wird nach der Papierherstellung auf das Papier aufgeklebt.

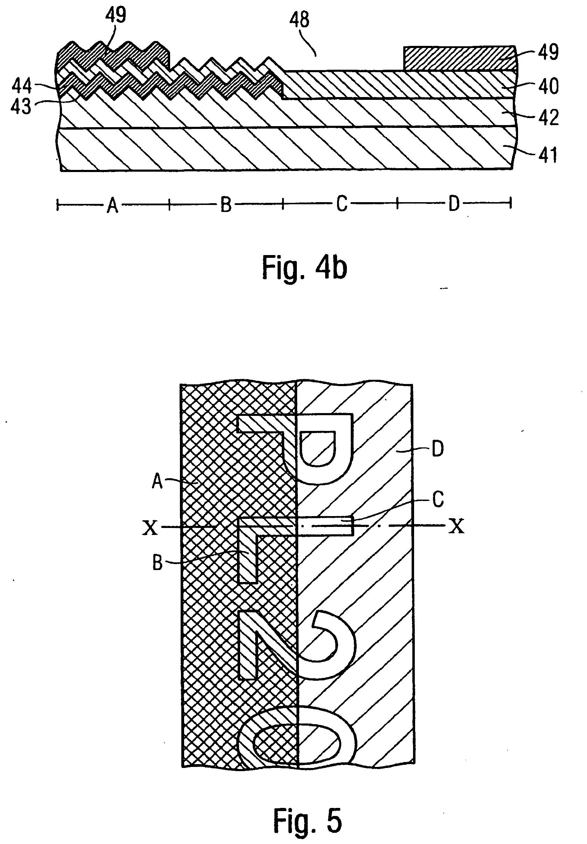

In den Figuren 2a bis 4b werden verschiedene alternative Ausführungsformen des erfindungsgemäßen Sicherheitselementes im Querschnitt entlang der Linie X-X aus Fig. 1 und Fig. 5 gezeigt. Die Bereiche A, B, C und D bezeichnen Abschnitte im Sicherheitselement mit bestimmten optischen Erscheinungsformen, die bei Fig. 5 näher erläutert werden.

In Fig. 2a ist ein Sicherheitselement im Querschnitt gezeigt, bei dem sich der erste und zweite Schichtaufbau auf gegenüberliegenden Seiten eines Substrates 21 befinden. Der erste Schichtaufbau ist auf der ersten Substratoberfläche angeordnet, der zweite Schichtaufbau auf der zweiten Substratoberfläche. Das Substrat ist eine transparente Folie, vorzugsweise PET, auf die eine transparente Prägelackschicht 22 aufgebracht wurde. In die Prägelackschicht sind Beugungsstrukturen 23 geprägt, die die ersten Teilbereiche darstellen. Alternativ können die Beugungsstrukturen direkt in das Substrat geprägt werden, so dass auf eine Prägelackschicht verzichtet werden kann. Die Beugungsstrukturen sind mit einer transluzenten Metallschicht 24 bedampft. Auf der zweiten Substratoberfläche liegt der zweite Schichtaufbau mit Farbkippeffekt vor. Der Farbkippeffekt wird mittels eines Dünnschichtaufbaus erzeugt, der aus einer Absorberschicht 25, einer Dielektrikums-Schicht 26 und einer Reflektorschicht 27 besteht. Bei der Herstellung wird zunächst die Absorberschicht auf das Substrat aufgedampft. Dann wird auf die Absorberschicht die Dielektrikumsschicht und danach die Reflektorschicht aufgedampft. In die Reflektorschicht werden Aussparungen 28 eingearbeitet, indem die Reflektorschicht mittels Ätzen, Lasern oder Waschverfahren nachträglich wieder teilweise entfernt wird oder bereits mittels Masken nur teilweise aufgedampft wird.

Der erste und zweite Schichtaufbau können auch getrennt auf jeweils der ersten Substratoberfläche eines ersten und eines zweiten Substrats vorbereitet werden. Die mit den Schichtaufbauten ausgestatteten Substrate können dann mit den jeweils zweiten Substratoberflächen zusammenkaschiert werden (nicht gezeigt).

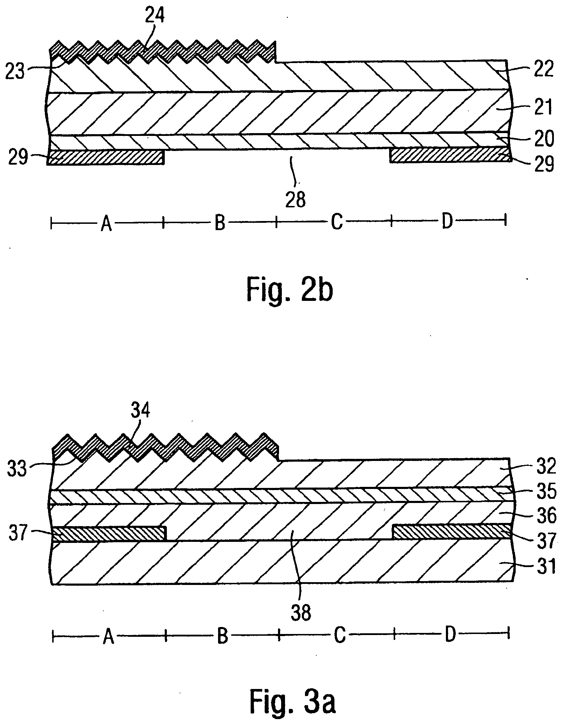

Fig. 2b zeigt ein Sicherheitselement, dessen Aufbau im Wesentlichen dem Aufbau in Fig. 2a entspricht. Das Sicherheitselement unterscheidet sich von dem in Fig. 2a gezeigten im zweiten Schichtaufbau. Hier wird der Farbkippeffekt nicht mittels eines mehrschichtigen Dünnschichtaufbaus erzeugt, sondern mittels einer Schicht aus Flüssigkristallmaterial 20 und einer dunklen Schicht 29 mit Aussparungen 28. Die Flüssigkristallschicht wird hierbei zuerst vollflächig auf das Substrat aufgedruckt und dann mit einer dunklen Schicht bedruckt. Die übrigen Bezugszeichen entsprechen denen in Fig. 2a.

In Fig. 3a ist ein Sicherheitselement im Querschnitt gezeigt, bei dem sich der erste und zweite Schichtaufbau auf derselben Seite eines Substrates 31 befinden. Der zweite Schichtaufbau ist auf der ersten Substratoberfläche angeordnet, und der erste Schichtaufbau wird auf dem zweiten Schichtaufbau aufgebracht. Das Substrat ist eine transparente Folie, vorzugsweise PET. Auf diese wird der zweite Schichtaufbau mit Farbkippeffekt aufgebracht. Der Farbkippeffekt wird mittels eines Dünnschichtaufbaus erzeugt, der aus einer Absorberschicht 35, einer Dielektrikumsschicht 36 und einer Reflektorschicht 37 besteht. Bei der Herstellung wird zunächst die Reflektorschicht aufgedampft. In die Reflektorschicht werden Aussparungen 38 eingearbeitet, indem die Reflektorschicht mittels Ätzen, Lasern oder Waschverfahren nachträglich wieder teilweise entfernt wird oder bereits mittels Masken nur teilweise aufgedampft wird. Dann werden die Dielektrikumsschicht und anschließend die Absorberschicht aufgedampft. Auf diesen Schichtaufbau wird eine transparente Prägelackschicht 32 aufgedruckt. In die Prägelackschicht sind Beugungsstrukturen 33 in den ersten Teilbereichen geprägt. Die Beugungsstrukturen sind mit einer transluzenten Metallschicht 34 bedampft. Bei dieser Ausführungsvariante ist es möglich, nach Aufbringen des Sicherheitselementes auf den zu sichernden Gegenstand das Substrat abzuziehen. Dies hat den Vorteil, dass das Sicherheitselement insgesamt eine geringere Dicke aufweist und sich so kaum auf die Dicke des Endprodukts auswirkt.

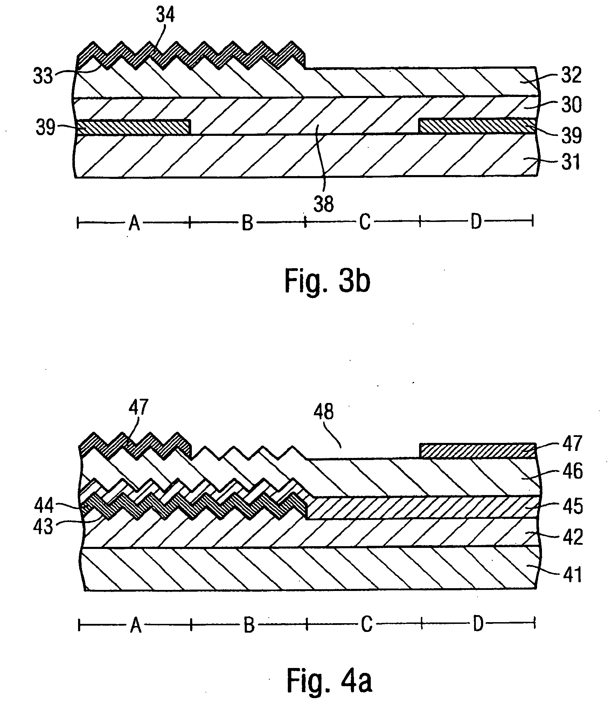

Fig. 3b zeigt ein Sicherheitselement, dessen Aufbau im Wesentlichen dem Aufbau in Fig. 3a entspricht. Das Sicherheitselement unterscheidet sich von dem in Fig. 3a gezeigten im zweiten Schichtaufbau. Hier wird der Farbkippeffekt nicht mittels eines mehrschichtigen Dünnschichtaufbaus erzeugt, sondern mittels einer Schicht aus Flüssigkristallmaterial 30 und einer dunklen Schicht 39 mit Aussparungen 38. Die dunkle Schicht wird hierbei zuerst bereichsweise auf den zweiten Schichtaufbau gedruckt und dann mit einer vollflächigen Schicht aus Flüssigkristallmaterial versehen. Auch hier kann das Substrat nach Übertragung des Sicherheitselements auf den zu sichernden Gegenstand entfernt werden. Die übrigen Bezugszeichen entsprechend denen in Fig. 3a.

In Fig. 4a ist ein Sicherheitselement im Querschnitt gezeigt, bei dem sich der erste und zweite Schichtaufbau auf derselben Seite eines Substrates 41 befinden. Der erste Schichtaufbau ist auf der ersten Substratoberfläche angeordnet und der zweite Schichtaufbau wird auf dem ersten Schichtaufbau aufgebracht. Das Substrat ist eine transparente Folie, vorzugsweise PET, auf die eine transparente Prägelackschicht 42 aufgebracht wurde. In die Prägelackschicht sind Beugungsstrukturen 43 in den ersten Teilbereichen geprägt. Alternativ können die Beugungsstrukturen direkt in das Substrat geprägt werden, so dass auf eine Prägelackschicht verzichtet werden kann. Die Beugungsstrukturen sind mit einer transluzenten Metallschicht 44 bedampft. Auf diesem ersten Schichtaufbau liegt der zweite Schichtaufbau mit Farbkippeffekt vor. Der Farbkippeffekt wird mittels eines Dünnschichtaufbaus erzeugt, der aus einer Absorberschicht 45, einer Dielektrikumsschicht 46 und einer Reflektorschicht 47 besteht. Bei der Herstellung wird zunächst die Absorberschicht auf das teilweise geprägte und metallisierte Substrat bzw. die teilweise geprägte und metallisierte Prägelackschicht aufgedampft. Dann wird auf die Absorberschicht die Dielektrikumsschicht und danach die Reflektorschicht aufgedampft. In die Reflektorschicht werden Aussparungen 48 eingearbeitet, indem die Reflektorschicht mittels Ätzen, Lasern oder Waschverfahren nachträglich wieder teilweise entfernt wird oder bereits mittels Masken nur teilweise aufgedampft wird. Bei dieser Ausführungsvariante ist es möglich, nach Aufbringen des Sicherheitselementes auf den zu sichernden Gegenstand das Substrat abzuziehen. Dies hat den Vorteil, dass das Sicherheitselement insgesamt eine geringere Dicke aufweist und sich so kaum auf die Dicke des Endprodukts auswirkt.

Fig. 4b zeigt ein Sicherheitselement, dessen Aufbau im Wesentlichen dem Aufbau in Fig. 4a entspricht. Das Sicherheitselement unterscheidet sich von dem in Fig. 4a gezeigten im zweiten Schichtaufbau. Hier wird der Farbkippeffekt nicht mittels eines mehrschichtigen Dünnschichtaufbaus erzeugt, sondern mittels einer Schicht aus Flüssigkristallmaterial 40 und einer dunklen Schicht 49 mit Aussparungen 48. Die Flüssigkristallschicht wird hierbei zuerst auf den ersten Schichtaufbau aufgebracht, z.B. gedruckt, und dann mit einer dunklen Schicht bereichsweise bedruckt. Auch hier kann das Substrat nach Übertragung des Sicherheitselements auf den zu sichernden Gegenstand entfernt werden. Die übrigen Bezugszeichen entsprechen denn in Fig. 4a.

Die Ausführungsformen der Fig. 4a und 4b haben den Vorteil, dass der zweite Schichtaufbau die Prägestrukturen nachbildet. Eingestrahltes Licht wird sowohl vom Farbkippeffekt zeigenden Schichtaufbau als auch vom Beugungseffekte zeigenden Schichtaufbau optimal ausgenutzt, so dass der Beugungs- als auch der Farbkippeffekt besonders brillant erscheinen.

Fig. 5 zeigt ein erfindungsgemäßes Sicherheitselement in Aufsicht mit Blick auf den ersten Schichtaufbau. Mögliche Schichtaufbauten des Sicherheitselements sind in den Fig. 2a bis 4b gezeigt. Die in den Fig. 2a bis Fig. 4b gezeigten Querschnitte ergeben sich beispielsweise bei einem Schnitt entlang der Linie X-X in Fig. 5. Im Bereich A ist ein beugungsoptisches Bild mit Farbkippeffekt erkennbar. In diesem Bereich liegen transluzente Bereiche des ersten Schichtaufbaus und opake Bereiche des zweiten Schichtaufbaus übereinander.

Im Bereich B liegt keine Reflektorschicht bzw. keine dunkle Schicht im zweiten Schichtaufbau vor, so dass kein Farbkippeffekt sichtbar ist. Im Bereich B erkennt der Betrachter also ein transluzentes, beugungsoptischen Bild. Je nach Ausgestaltung der transluzenten Eigenschaften des beugungsoptischen Bildes kann das beugungsoptische Bild aufgrund seiner fast transparenten Eigenschaften kaum erkennbar sein oder bei stärker reflektierenden Eigenschaften deutlicher hervortreten. Die Reflexion kann dabei leicht z.B. über die Schichtdicke der transluzenten Metallisierung 24, 34, 44 eingestellt werden.

Auch im Bereich C liegt keine Reflexionsschicht bzw. dunkle Schicht im zweiten Schichtaufbau vor. Der erste Schichtaufbau ist hier transparent, so dass der Betrachter ein transparentes Fenster wahrnimmt.

Bevorzugt sind die Aussparungen in der Reflexionsschicht bzw. der dunklen Schicht über ihre gesamte Ausdehnung, d. h in den Bereichen B und C, also auch im Überlappungsbereich mit den transluzenten Teilbereichen des ersten Schichtaufbaus gut im Durchlicht erkennbar.

Im Bereich D liegen transparente Bereiche des ersten Schichtaufbaus und opake Bereiche des zweiten Schichtaufbaus übereinander und der Betrachter erkennt einen reinen Farbkippeffekt.

Bei Betrachtung des Sicherheitselements von der Seite des zweiten Schichtaufbaus her ist in den Bereichen A und D (Fig. 2a bis Fig. 3b) eine dunkle oder reflektierende Schicht sichtbar. Sind die Schichtaufbauten so gestaltet, dass im zweiten Schichtaufbau, insbesondere in der Reflektorschicht, die Beugungsstrukturen des ersten Schichtaufbaus abgebildet werden, ist in diesen Bereichen ein beugungsoptisches Bild sichtbar. Die Aussparungen der Reflektorschicht bzw. der dunklen Schicht erscheinen transparent im Bereich C und als transluzente Bereiche mit einem beugungsoptischen Bild im Bereich B. Der Grad der Transluzenz bestimmt wiederum den Grad der Sichtbarkeit des beugungsoptischen Bildes. Je optisch dünner die transluzente Schicht ausgeführt ist, umso weiter tritt das beugungsoptische Bild im Vergleich zu den transparenten Bereichen C zurück.

Bei geschickter Anordnung der einzelnen Teilbereiche in den Schichtaufbauten können die verschiedensten Informationen und vielfältige Variationen davon in komplexer Form dargestellt werden. Im vorliegenden Fall weist der Schriftzug "PL20" vier optisch unterschiedlich erscheinende Bereiche A, B, C, D auf, die nur durch eine exakte und aufwendige Herstellung erzielt werden können.

## Patentansprüche

1. Mehrschichtiges Sicherheitselement umfassend
- einen ersten transparenten Schichtaufbau mit ersten transluzenten Teilbereichen, welche Beugungsstrukturen (22, 33, 43) und eine transluzente Metallisierung (24, 34, 44) aufweisen, die auf den Beugungsstrukturen (23, 33, 43) vorliegt, und
- einen zweiten opaken, Farbkippeffekt aufweisenden Schichtaufbau mit zweiten transparenten Teilbereichen,
- wobei der zweite Schichtaufbau entweder ein Dünnschichtaufbau ist, der eine opake Reflektorschicht (27, 37, 47) und weitere Schichten umfasst und bei dem die zweiten Teilbereiche Aussparungen (28, 38, 48) in der Reflektorschicht (27, 37, 47) sind, oder eine Schicht aus Flüssigkristallmaterial (20,30,40) und eine dunkle Schicht (29, 39, 49) umfasst und die zweiten Teilbereiche Aussparungen (28, 38, 48) in der dunklen Schicht (29, 39, 49) sind,
- wobei der erste Schichtaufbau und der zweite Schichtaufbau so übereinander angeordnet sind, dass die ersten transluzenten Teilbereiche des ersten Schichtaufbaus und die zweiten transparenten Teilbereiche des zweiten Schichtaufbaus teilweise überlappen, und
- wobei zwischen der opaken Reflektorschicht (27,37,47) und dem ersten Schichtaufbau die weiteren Schichten des Dünnschichtaufbaus liegen oder zwischen der dunklen Schicht (29, 39, 49) und dem ersten Schichtaufbau die Schicht aus Flüssigkristallmaterial (20, 30, 40) liegt.

2. Sicherheitselement nach Anspruch 1, **dadurch gekennzeichnet, dass** die Metallisierung eine vollflächige oder eine gerasterte Metallschicht ist.

3. Sicherheitselement nach Anspruch 1 oder 2, **dadurch gekennzeichnet, dass** die Beugungsstrukturen in eine Prägelackschicht eingebracht sind.

4. Sicherheitselement nach wenigstens einem der Ansprüche 1 bis 3, **dadurch gekennzeichnet, dass** der zweite Schichtaufbau ein Dünnschichtaufbau mit einer opaken Reflektorschicht ist und die Reflektorschicht aus Aluminium besteht.

5. Sicherheitselement nach wenigstens einem der Ansprüche 1 bis 4, **dadurch gekennzeichnet, dass** der zweite Schichtaufbau ein Dünnschichtaufbau mit einer opaken Reflektorschicht und weiteren Schichten ist und die weiteren Schichten eine Dielektrikumsschicht und eine Absorberschicht umfassen.

6. Sicherheitselement nach Anspruch 5, **dadurch gekennzeichnet, dass** die zweiten Teilbereiche Aussparungen in der Reflektor- und Absorberschicht sind.

7. Sicherheitselement nach wenigstens einem der Ansprüche 1 bis 3, **dadurch gekennzeichnet, dass** der zweite Schichtaufbau eine vollflächige Schicht aus Flüssigkristallmaterial umfasst.

8. Sicherheitselement nach wenigstens einem der Ansprüche 1 bis 7, **dadurch gekennzeichnet, dass** der erste und zweite Schichtaufbau auf einem Substrat mit einer ersten und einer zweiten, einander gegenüberliegenden Substratoberfläche vorliegen.

9. Sicherheitselement nach Anspruch 8, **dadurch gekennzeichnet, dass** der erste und zweite Schichtaufbau auf den einander gegenüberliegenden Substratoberflächen des Substrates vorliegen, oder der erste und zweite Schichtaufbau auf derselben Substratoberfläche des Substrates vorliegen.

10. Sicherheitspapier mit einem Fensterbereich und einem in das Papier eingebrachten oder auf das Papier aufgebrachten Sicherheitselement nach wenigstens einem der Ansprüche 1 bis 9, **dadurch gekennzeichnet, dass** das Sicherheitselement den Fensterbereich (12) überspannt.

11. Wertdokument umfassend ein Sicherheitspapier nach Anspruch 10.

12. Verfahren zur Herstellung eines Sicherheitselements nach einem der Ansprüche 1 bis 7, bei dem
- ein erster transparenter Schichtaufbau mit ersten transluzenten Teilbereichen und
- ein zweiter opaker, Farbkippeffekt aufweisender Schichtaufbau mit zweiten transparenten Teilbereichen bereitgestellt werden, und
- der erste Schichtaufbau und der zweite Schichtaufbau so übereinander angeordnet werden, dass die ersten transluzenten Teilbereiche des ersten Schichtaufbaus und die zweiten transparenten Teilbereiche des zweiten Schichtaufbaus teilweise überlappen,
wozu
a) ein Substrat mit einer ersten und einer zweiten, einander gegenüberliegenden Substratoberfläche bereitgestellt wird,
b) in das Substrat auf der ersten Oberfläche in den ersten Teilbereichen Beugungsstrukturen (23, 33, 43) geprägt werden oder das Substrat auf der ersten Oberfläche mit einer transparenten Prägelackschicht versehen wird, in die in den ersten Teilbereichen Beugungsstrukturen (23, 33, 43) geprägt werden,
c) die geprägten Teilbereiche mit einer transluzenten Metallschicht (24, 34,44) versehen werden, und
d) auf die zweite Oberfläche der zweite Schichtaufbau aufgebracht wird, wozu entweder
d1) auf die zweite Oberfläche des Substrates eine Schicht aus Flüssigkristallmaterial (20, 30, 40) aufgebracht wird und diese anschließend bis auf die zweiten Teilbereiche mit einer dunklen Schicht (29, 39, 49) versehen wird, oder
d2) auf die zweite Oberfläche des Substrates folgende Schichten in der Reihenfolge Absorber- (25, 35, 45), Dielektrikum- (26, 36, 46), Reflektorschicht (27, 37,47) aufgedampft werden und die Reflektorschicht (27, 37, 47) in den zweiten Teilbereichen nicht aufgebracht oder nachträglich entfernt wird.

13. Verfahren zur Herstellung eines Sicherheitselements nach einem der Ansprüche 1 bis 9, bei dem
- ein erster transparenter Schichtaufbau mit ersten transluzenten Teilbereichen und
- ein zweiter opaker, Farbkippeffekt aufweisender Schichtaufbau mit zweiten transparenten Teilbereichen bereitgestellt werden, und
- der erste Schichtaufbau und der zweite Schichtaufbau so übereinander angeordnet werden, dass die ersten transluzenten Teilbereiche des ersten Schichtaufbaus und die zweiten transparenten Teilbereiche des zweiten Schichtaufbaus teilweise überlappen,
wozu
a) ein Substrat mit einer ersten und einer zweiten, einander gegenüberliegenden Substratoberfläche bereitgestellt wird,
b) auf der ersten Oberfläche der zweite Schichtaufbau aufgebracht wird, wozu entweder
b1) auf die erste Oberfläche des Substrates bis auf die zweiten Teilbereiche eine dunkle Schicht (29, 39, 49) aufgebracht wird und darüber eine Schicht aus Flüssigkristallmaterial (20, 30, 40) aufgebracht wird, oder
b2) auf die erste Oberfläche des Substrates folgende Schichten in der Reihenfolge Reflektor- (27, 37, 47), Dielektrikum- (26, 36, 46), Absorberschicht (25, 35, 45) aufgedampft werden und die Reflektorschicht (27, 37,47) in den zweiten Teilbereichen nicht aufgebracht oder nachträglich entfernt wird,
c) auf den zweiten Schichtaufbau eine transparente Prägelackschicht aufgebracht wird, in die in den ersten Teilbereichen Beugungsstrukturen (23, 33, 43) geprägt werden und
d) die geprägten Teilbereiche mit einer transluzenten Metallschicht (24, 34, 44) versehen werden.

14. Verfahren zur Herstellung eines Sicherheitselements nach einem der Ansprüche 1 bis 7, bei dem
- ein erster transparenter Schichtaufbau mit ersten transluzenten Teilbereichen und
- ein zweiter opaker, Farbkippeffekt aufweisender Schichtaufbau mit zweiten transparenten Teilbereichen bereitgestellt werden, und
- der erste Schichtaufbau und der zweite Schichtaufbau so übereinander angeordnet werden, dass die ersten transluzenten Teilbereiche des ersten Schichtaufbaus und die zweiten transparenten Teilbereiche des zweiten Schichtaufbaus teilweise überlappen,
wozu
a) ein Substrat mit einer ersten und einer zweiten, einander gegenüberliegenden Substratoberfläche bereitgestellt wird,
b) in das Substrat auf der ersten Oberfläche in den ersten Teilbereichen Beugungsstrukturen (23, 33, 43) geprägt werden oder das Substrat auf der ersten Oberfläche mit einer transparenten Prägelackschicht versehen wird, in die in den ersten Teilbereichen Beugungsstrukturen (23, 33, 43) geprägt werden,
c) die geprägten Teilbereiche mit einer transluzenten Metallschicht (24,34,44) versehen werden, und
d) darauf der zweite Schichtaufbau aufgebracht wird, wozu entweder
d1) zuerst eine Schicht aus Flüssigkristallmaterial (20, 30, 40) aufgebracht wird und auf diese bis auf die zweiten Teilbereiche eine dunkle Schicht (29, 39, 49) aufgebracht wird, oder
d2) auf die erste Oberfläche des Substrates folgende Schichten in der Reihenfolge Absorber- (25, 35, 45), Dielektrikum- (26, 36, 46), Reflektorschicht (27, 37, 47) aufgedampft werden und die Reflektorschicht (27, 37,47) in den zweiten Teilbereichen nicht aufgebracht oder nachträglich entfernt wird.

15. Verfahren zur Herstellung eines Sicherheitspapiers, **dadurch gekennzeichnet, dass** das Sicherheitselement nach wenigstens einem der Ansprüche 1 bis 9 in ein Papier mit einem Fensterbereich (12) ein- oder auf das Papier aufgebracht wird, **dadurch gekennzeichnet, dass** der Fensterbereich (12) vom Sicherheitselement überspannt wird.

## Claims

1. A multilayer security element comprising
- a first, transparent layer structure having first, translucent sub-regions, the first sub-regions exhibiting diffraction patterns (22, 33, 43) and a translucent metallization (24, 34, 44), the translucent metallization being present on the diffraction patterns (23, 33, 43), and
- a second, opaque layer structure exhibiting a color-shift effect and having second, transparent sub-regions,
- wherein the second layer structure is either a thin-film structure that comprises an opaque reflector layer (27, 37, 47) and further layers and wherein the second sub-regions are gaps (28, 38, 48) in the reflector layer (27, 37, 47), or comprises a layer composed of liquid crystal material (20, 30, 40) and a dark layer (29, 39, 49) and wherein the second sub-regions are gaps (28, 38, 48) in the dark layer (29, 39, 49),
- wherein the first layer structure and the second layer structure are stacked on top of one another such that the first, translucent sub-regions of the first layer structure and the second, transparent sub-regions of the second layer structure partially overlap, and
- wherein the further layers of the thin-film structure lie between the opaque reflector layer (27, 37, 47) and the first layer structure, or wherein the layer composed of liquid crystal material (20, 30, 40) lies between the dark layer (29, 39, 49) and the first layer structure.

2. The security element according to claim 1, **characterized in that** the metallization is a contiguous or a screened metal layer.

3. The security element according to claim 1 or 2, **characterized in that** the diffraction patterns are introduced into an embossing lacquer layer.

4. The security element according to at least one of claims 1 to 3, **characterized in that** the second layer structure is a thin-film structure that comprises an opaque reflector layer and that the reflector layer consists of aluminum.

5. The security element according to at least one of claims 1 to 4, **characterized in that** the second layer structure is a thin-film structure that comprises an opaque reflector layer and further layers and that the further layers comprise a dielectric layer and an absorber layer.

6. The security element according to claim 5, **characterized in that** the second sub-regions are gaps in the reflector and absorber layer.

7. The security element according to at least one of claims 1 to 3, **characterized in that** the second layer structure comprises a contiguous layer composed of liquid crystal material.

8. The security element according to at least one of claims 1 to 7, **characterized in that** the first and second layer structure are present on a substrate having a first and a second substrate surface opposing each other.

9. The security element according to claim 8, **characterized in that** the first and second layer structure are present on the opposing substrate surfaces of the substrate.

10. A security paper having a window region and, introduced into the paper or applied to the paper, a security element according to at least one of claims 1 to 9, **characterized in that** the security element spans the window region (12).

11. A value document comprising a security paper according to claim 10.

12. A method for manufacturing a security element according to one of claims 1 to 7, in which
- a first, transparent layer structure having first, translucent sub-regions and
- a second, opaque layer structure exhibiting a color-shift effect and having second, transparent sub-regions are provided, and
- the first layer structure and the second layer structure are stacked on top of one another such that the first, translucent sub-regions of the first layer structure and the second, transparent sub-regions of the second layer structure partially overlap,
whereto
a) a substrate having a first and a second substrate surface opposing each other is provided,
b) diffraction patterns (23, 33, 43) are embossed in the substrate, in the first sub-regions on the first surface or
the substrate is provided, on the first surface, with a transparent embossing lacquer layer in which diffraction patterns (23, 33, 43) are embossed in the first sub-regions,
c) the embossed sub-regions are provided with a translucent metal layer (24, 34, 44), and
d) the second layer structure is applied to the second surface, whereto either
d1) a layer composed of liquid crystal material (20, 30, 40) is applied to the second surface of the substrate, and thereafter, this layer, except for the second sub-regions, is provided with a dark layer (29, 39, 49), or
d2) the following layers are vapor deposited on the second surface of the substrate in the sequence absorber layer (25, 35, 45), dielectric layer (26, 36, 46), reflector layer (27, 37, 47), and the reflector layer (27, 37, 47) is not applied in the second sub-regions, or is subsequently removed.

13. A method for manufacturing a security element according to one of claims 1 to 9, in which
- a first, transparent layer structure having first, translucent sub-regions and
- a second, opaque layer structure exhibiting a color-shift effect and having second, transparent sub-regions are provided, and
- the first layer structure and the second layer structure are stacked on top of one another such that the first, translucent sub-regions of the first layer structure and the second, transparent sub-regions of the second layer structure partially overlap,
whereto
a) a substrate having a first and a second substrate surface opposing each other is provided,
b) the second layer structure is applied to the first surface, whereto either
b1) a dark layer (29, 39, 49) is applied to the first surface of the substrate except for the second sub-regions, and a layer composed of liquid crystal material (20, 30, 40) is applied over that, or
b2) the following layers are vapor deposited on the first surface of the substrate in the sequence reflector layer (27, 37, 47), dielectric layer (26, 36, 46), absorber layer (25, 35, 45), and the reflector layer (27, 37, 47) is not applied in the second sub-regions, or is subsequently removed,
c) a transparent embossing lacquer layer in which diffraction patterns (23, 33, 43) are embossed in the first sub-regions is applied to the second layer structure and
d) the embossed sub-regions are provided with a translucent metal layer (24, 34, 44).

14. A method for manufacturing a security element according to one of claims 1 to 7, in which
- a first, transparent layer structure having first, translucent sub-regions and
- a second, opaque layer structure exhibiting a color-shift effect and having second, transparent sub-regions are provided, and
- the first layer structure and the second layer structure are stacked on top of one another such that the first, translucent sub-regions of the first layer structure and the second, transparent sub-regions of the second layer structure partially overlap,
whereto
a) a substrate having a first and a second substrate surface opposing each other is provided,
b) diffraction patterns (23, 33, 43) are embossed in the substrate, in the first sub-regions on the first surface or
the substrate is provided, on the first surface, with a transparent embossing lacquer layer in which diffraction patterns (23, 33, 43) are embossed in the first sub-regions,
c) the embossed sub-regions are provided with a translucent metal layer (24, 34, 44), and
d) the second layer structure is applied thereto, whereto either
d1) first a layer composed of liquid crystal material (20, 30, 40) is applied, and a dark layer (29, 39, 49) is applied to that except for the second sub-regions, or
d2) the following layers are vapor deposited on the first surface of the substrate in the sequence absorber layer (25, 35, 45), dielectric layer (26, 36, 46), reflector layer (27, 37, 47) and the reflector layer (27, 37, 47) is not applied in the second sub-regions, or is subsequently removed.

15. A method for manufacturing a security paper, **characterized in that** the security element according to at least one of claims 1 to 9 is introduced into a paper having a window region (12) or is applied to the paper, **characterized in that** the window region (12) is spanned by the security element.

## Revendications

1. Elément de sécurité multicouche, comprenant
- une première structure stratifiée transparente avec des premières zones partielles translucides qui présentent des structures de diffraction (22, 33, 43) et une métallisation translucide (24, 34, 44) qui se présente sur les structures de diffraction (23, 33, 43), et
- une deuxième structure stratifiée opaque présentant un effet de couleur variable avec des secondes zones partielles transparentes,
- la seconde structure stratifiée étant une structure à couches minces, laquelle comprend une couche réfléchissante opaque (27, 37, 47) et d'autres couches et dans laquelle les secondes zones partielles sont des évidements (28, 38, 48) dans la couche réfléchissante (27, 37, 47), ou bien comprenant une couche en matériau à cristaux liquides (20, 30, 40) et une couche sombre (29, 39, 49), et les secondes zones partielles étant des évidements (28, 38, 48) dans la couche sombre (29, 39, 49),
- la première structure stratifiée et la seconde structure stratifiée étant disposées l'une au-dessus de l'autre de manière à ce que les premières zones partielles translucides de la première structure stratifiée et les secondes zones partielles transparentes de la seconde structure stratifiée se chevauchent partiellement, et
- les autres couches de la structure à couches minces se situant entre la couche réfléchissante opaque (27, 37, 47) et la première structure stratifiée, ou bien la couche en matériau à cristaux liquides (20, 30, 40) se situant entre la couche sombre (29, 39, 49) et la première structure stratifiée.

2. Elément de sécurité selon la revendication 1, **caractérisé en ce que** la métallisation est une couche métallique sur toute la surface ou tramée.

3. Elément de sécurité selon la revendication 1 ou 2, **caractérisé en ce que** les structures de diffraction sont intégrées dans une couche de laque d'impression.

4. Elément de sécurité selon l'une au moins des revendications 1 à 3, **caractérisé en ce que** la seconde structure stratifiée est une structure à couches minces avec une couche réfléchissante opaque et **en ce que** la couche réfléchissante se compose d'aluminium.

5. Elément de sécurité selon l'une au moins des revendications 1 à 4, **caractérisé en ce que** la seconde structure stratifiée est une structure à couches minces avec une couche réfléchissante opaque et d'autres couches et **en ce que** les autres couches comprennent une couche diélectrique et une couche absorbante.

6. Elément de sécurité selon la revendication 5, **caractérisé en ce que** les secondes zones partielles sont des évidements dans la couche réfléchissante et absorbante.

7. Elément de sécurité selon l'une au moins des revendications 1 à 3, **caractérisé en ce que** la seconde structure stratifiée comprend une couche sur toute la surface en un matériau à cristaux liquides.

8. Elément de sécurité selon l'une au moins des revendications 1 à 7, **caractérisé en ce que** les première et seconde structures stratifiées se présentent sur un substrat avec une première et une seconde surface de substrat situées en vis-à-vis l'une de l'autre.

9. Elément de sécurité selon la revendication 8, **caractérisé en ce que** les première et seconde structures stratifiées se présentent sur les surfaces du substrat situées en vis-à-vis l'une de l'autre, ou bien **en ce que** les première et seconde structures stratifiées se présentent sur la même surface de substrat du substrat.

10. Papier de sécurité avec une zone à fenêtre et un élément de sécurité selon l'une au moins des revendications 1 à 9 intégré dans le papier ou appliqué sur le papier, **caractérisé en ce que** l'élément de sécurité recouvre la zone à fenêtre (12).

11. Document de valeur comprenant un papier de sécurité selon la revendication 10.

12. Procédé pour la fabrication d'un élément de sécurité selon l'une des revendications 1 à 7, dans lequel
- on met à disposition une première structure stratifiée transparente avec des premières zones partielles translucides et
- une seconde structure stratifiée opaque présentant un effet de couleur variable avec des secondes zones partielles transparentes, et
- la première structure stratifiée et la seconde structure stratifiée étant disposées l'une au-dessus de l'autre de manière à ce que les premières zones partielles translucides de la première structure stratifiée et les secondes zones partielles transparentes de la seconde structure stratifiée se chevauchent partiellement,
moyennant quoi
a) on met à disposition un substrat avec une première et une seconde surface de substrat situées en vis-à-vis l'une de l'autre,
b) des structures de diffraction (23, 33, 43) étant estampées dans le substrat, sur la première surface, dans les premières zones partielles ou bien
le substrat étant garni, sur la première surface, d'une couche de laque d'impression transparente dans laquelle des structures de diffraction (23, 33, 43) sont estampées dans les premières zones partielles,
c) les zones partielles estampées étant pourvues d'une couche métallique translucide (24, 34, 44), et
d) la seconde structure stratifiée étant appliquée sur la seconde surface, moyennant quoi
d1) on applique sur la seconde surface du substrat une couche en matériau à cristaux liquides (20, 30, 40) et celle-ci étant ensuite garnie avec une couche sombre (29, 39, 49) à l'exception des secondes zones partielles, ou bien
d2) sur la seconde surface du substrat, les couches suivantes : absorbante (25, 35, 45), diélectrique (26, 36, 46), réfléchissante (27, 37, 47) étant appliquées, dans cet ordre, par condensation de vapeur, et la couche réfléchissante (27, 37, 47) n'étant pas appliquée dans les secondes zones partielles ou enlevée par la suite.

13. Procédé pour la fabrication d'un élément de sécurité selon l'une des revendications 1 à 9, dans lequel
- une première structure stratifiée transparente avec des premières zones partielles translucides et
- une seconde structure stratifié opaque présentant un effet de couleur variable avec des secondes zones partielles transparentes étant mises à disposition, et
- la première structure stratifiée et la seconde structure stratifiée étant disposées l'une au-dessus de l'autre de manière à ce que les premières zones partielles translucides de la première structure stratifiée et les secondes zones partielles transparentes de la seconde structure stratifiée se chevauchent partiellement,
moyennant quoi
a) on met à disposition un substrat avec une première et une seconde surface de substrat situées en vis-à-vis l'une de l'autre,
b) la seconde structure stratifiée étant appliquée sur la première surface, moyennant quoi
b1) on applique sur la première surface du substrat, à l'exception des secondes zones partielles, une couche sombre (29, 39, 49) et sur celle-ci, une couche en matériau à cristaux liquides (20, 30, 40), ou bien
b2) on applique par condensation de vapeur sur la première surface du substrat les couches suivantes : réfléchissante (27, 37, 47), diélectrique (26, 36, 46), absorbante (25, 35, 45), dans cet ordre, et la couche réfléchissante (27, 37, 47) n'étant pas appliquée dans les secondes zones partielles ou étant enlevée par la suite,
c) une couche de laque d'impression transparente étant appliquée sur la seconde structure stratifiée, dans laquelle couche des structures de diffraction (23, 33, 43) sont estampées dans les premières zones partielles, et
d) les zones partielles estampées étant munies d'une couche métallique translucide (24, 34, 44).

14. Procédé pour la fabrication d'un élément de sécurité selon l'une des revendications 1 à 7, dans lequel
- on met à disposition une première structure stratifiée transparente avec des premières zones partielles translucides et
- une seconde structure stratifiée opaque présentant un effet de couleur variable avec des secondes zones partielles transparentes, et
- la première structure stratifiée et la seconde structure stratifiée étant disposées l'une au-dessus de l'autre de manière à ce que les premières zones partielles translucides de la première structure stratifiée et les secondes zones partielles transparentes de la seconde structure stratifiée se chevauchent partiellement, moyennant quoi
a) on met à disposition un substrat avec une première et une seconde surface de substrat situées en vis-à-vis l'une de l'autre,
b) des structures de diffraction (23, 33, 43) étant estampées dans le substrat, sur la première surface, dans les premières zones partielles ou bien
le substrat sur la première surface étant garni d'une couche de laque d'impression transparente dans laquelle des structures de diffraction (23, 33, 43) sont estampées dans les premières zones partielles,
c) les zones partielles estampées étant garnies d'une couche métallique translucide (24, 34, 44), et
d) la seconde structure stratifiée étant appliquée là-dessus, moyennant quoi
d1) on applique tout d'abord une couche en matériau à cristaux liquides (20, 30, 40), et une couche sombre (29, 39, 49) étant appliquée sur celle-ci à l'exception des secondes zones partielles, ou bien
d2) les couches suivantes : absorbante (25, 35, 45), diélectrique (26, 36, 46), réfléchissante (27, 37, 47) étant appliquées par condensation de vapeur, dans cet ordre, sur la première surface du substrat, et la couche réfléchissante (27, 37, 47) n'étant pas appliquée dans les secondes zones partielles ou bien étant enlevée par la suite.

15. Procédé pour la fabrication d'un papier de sécurité, **caractérisé en ce que** l'élément de sécurité selon l'une au moins des revendications 1 à 9 est intégré dans un papier avec une zone à fenêtre (12) ou est appliqué sur le papier, **caractérisé en ce que** la zone à fenêtre (12) est recouverte par l'élément de sécurité.
